# EUROPEAN PATENT SPECIFICATION

(11) **EP 4 609 083 B1**
(45) Date of publication and mention of the grant of the patent: **25.11.2026**
(21) Application number: 23798293.9
(22) Date of filing: 24.10.2023
(51) Int. Cl.: F16D 66/00, F16D 66/02, B60T 17/22

(54) **UNIT FOR MONITORING THE WEAR OF A BRAKING MEMBER OF A VEHICLE**
EINHEIT ZUR ÜBERWACHUNG DES VERSCHLEISSES EINES BREMSELEMENTS EINES FAHRZEUGS
UNITÉ POUR SURVEILLER L'USURE D'UN ORGANE DE FREINAGE D'UN VÉHICULE

(30) Priority: 25.10.2022 IT 202200022014
(43) Date of publication of application: 03.09.2025
(73) Proprietor: Stellantis Europe S.p.A., 10135 Torino (TO) (IT)
(72) Inventor: BADINO, Renato, 10135 TORINO (IT); IELUZZI, Michele, 10135 TORINO (IT)
(74) Representative: Studio Torta S.p.A.
(86) International application number: PCT/IB2023/060706
(87) International publication number: WO 2024/089590

(56) References cited:
- DE-A1- 10 045 219
- US-A1- 2010 286 881
- US-A1- 2018 128 334
- US-A1- 2022 154 793

## Description

### CROSS-REFERENCE TO RELATED APPLICATIONS

This Patent Application claims priority from Italian Patent Application No. 102022000022014 filed on October 25, 2022.

### TECHNICAL FIELD

The present invention concerns a unit for monitoring the wear of a braking member of a vehicle, for example a brake pad or a shoe for drum brake or other friction braking member.

### BACKGROUND

For some time now, car manufacturers have focused on equipping vehicles with an instrument that allows the driver to monitor as continuously as possible the state of wear of the braking member.

Detection units for detecting wear of the braking member are currently known, provided with a detection sensor incorporated in the braking member and comprising a plurality of electric circuits arranged in series, and subject to being sequentially interrupted during progressive wear of the braking member. The sensor is connected to a smart unit, which reads the sequential interruption of the electric circuits and consequently provides information on the state of wear of the braking member.

In order to detect the state of wear as continuously as possible, the electric circuits are positioned as close as possible to one another. Said configuration of the electric circuits on the one hand guarantees practically continuous information on the state of wear of the braking member, but on the other has the drawback of being easily subject to short-circuiting which obviously affects operation of the sensor. Short-circuiting occurs due to haphazard movement of the electric circuit following damage due to wear of the braking member.

US 2022/154793 A1 discloses a unit for detecting the wear and temperature for a braking member.

The need was therefore felt for a solution capable of continuously providing information on the state of wear of the braking member without the problems of the known art described above.

The inventors of the prevent invention have produced a sensor, the technical characteristics of which are capable of meeting the above need by alternating detections of the actual wear and estimation of the wear based on pre-set conditions.

### SUMMARY

The subject of the present invention is a unit for monitoring the wear of a braking member of a vehicle, said monitoring unit comprising a detection sensor and a data processing unit electrically connected to said detection sensor and adapted to produce information concerning the state of wear; said sensor being fixed to said braking member and comprising a plurality of electric circuits arranged in series along an axis perpendicular to a friction surface of said braking member; at least part of said electric circuits comprising a respective temperature detector; said monitoring unit being characterized in that said data processing unit is programmed to cyclically repeat the sequence of the following steps:
- detection of actual wear, in which the interruption of an electric circuit arranged on said braking member is read and a respective actual wear value is associated with said interruption;
- wear forecast in which, from said respective actual wear value, a wear forecast is made based on a mathematical model that correlates operating conditions of the vehicle with respective wear values.

In this way it will be possible to space the electric circuits in the sensor from one another without foregoing continuous information on the state of wear of the braking member. The possibility of spacing the electric circuits from one another avoids short-circuiting with obvious advantages in terms of efficiency and, at the same time, makes the sensor overall simpler and cheaper to produce.

Preferably, the operating conditions of the vehicle comprise braking conditions chosen from the group comprising: hydraulic pressure of the brakes, speed at the braking moment, inertia, deceleration, braking time, acceleration and temperature of the brake disc.

Preferably, the operating conditions of the vehicle comprise working conditions of the vehicle chosen from the group comprising: wheel ventilation, weight distribution, temperature on the outside of the vehicle, humidity on the outside of the vehicle, road surface conditions.

Preferably, said wear forecast step is carried out by comparing the operating conditions of the vehicle with a previously set matrix of values experimentally obtained that correlate wear values with the operating conditions of the vehicle.

Preferably, the electric circuits that comprise the respective temperature detector alternate with electric circuits that do not comprise the respective temperature detector.

It has been experimentally found that the alternating presence of temperature sensors between the electric circuits allows a correct and reliable temperature evaluation without excessively occupying the space of the sensor, thus benefiting the integrity and functionality of said sensor.

Preferably, said detection sensor comprises a plurality of insulating elements, each of which is arranged between two consecutive electric circuits.

The presence of the insulating elements represents a further guarantee against short-circuiting.

Preferably, the temperature detectors consist of platinum resistance thermistors.

An another subject of the present invention is a monitoring method for monitoring the wear of a braking member of a vehicle; said method being characterized in that it comprises the cyclic repetition of a sequence of the following steps:
- actual wear detection, during which a data processing unit reads the interruption of an electric circuit arranged on said braking member and associates it with an actual wear value; a plurality of electric circuits being arranged on said braking member in a sequential position along an axis perpendicular to a friction surface of the braking member;
- wear forecast, during which a forecast unit, starting from an actual wear value obtained from the preceding detection step, compares operating conditions of the vehicle with a previously set matrix correlating wear values with combinations of operating conditions of the vehicle;
said forecast step beginning again with every electric circuit interruption based on the new actual wear value.

### BRIEF DESCRIPTION OF THE DRAWINGS

An embodiment example for illustrative non-limiting purposes will be described below, with the aid of the attached figures in which:
figure 1 illustrates, in an extremely schematic plan and form, a vehicle having a braking system monitored and provided with a plurality of units for monitoring the wear of braking members according to the present invention; and
figure 2 illustrates the monitoring unit of figure 1 with parts removed for clarity.

### DESCRIPTION OF EMBODIMENTS

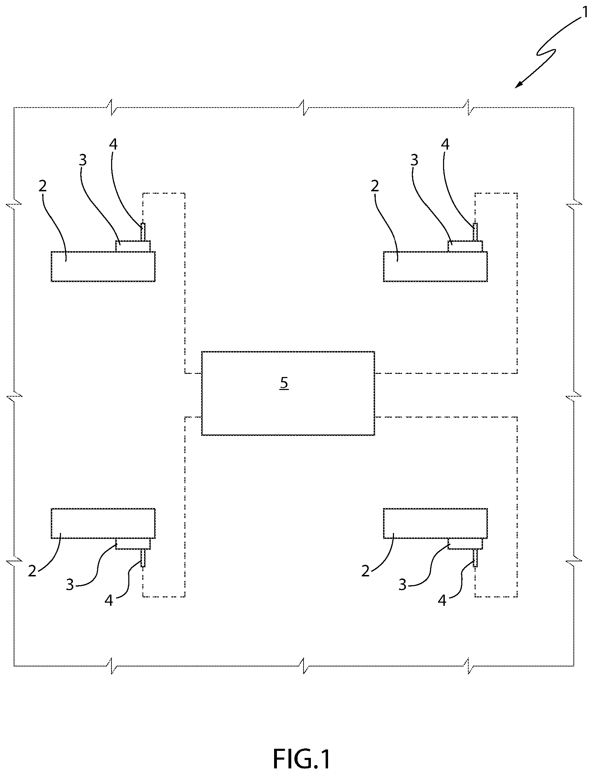

In figure 1, the number 1 indicates overall a vehicle comprising four wheels 2, each of which is associated with a braking assembly 3, and four monitoring units 4 for monitoring the wear, each of which is associated with a respective braking assembly 3. The vehicle 1 further comprises an electric control unit 5 connected to an interface with the driver to provide information on the state of wear of the braking member.

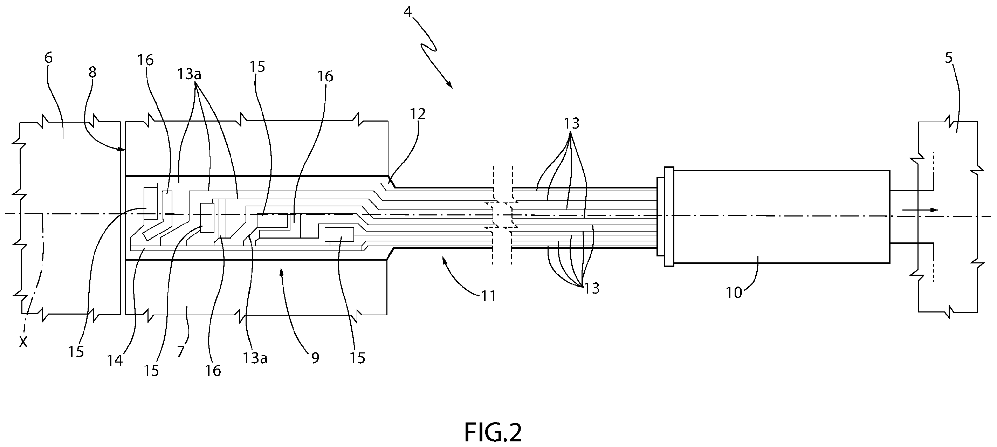

As illustrated schematically in figure 2, each braking assembly 3 comprises a disc 6 and a braking member 7 such as, for example, a brake pad, that acts as a friction element on the disc 6. The braking member 7 has a friction surface 8 which in use abuts on the disc 6 to exert the braking action.

Referring again to figure 2, each monitoring unit 4 comprises a detection sensor 9, a data processing unit 10 and electric wiring 11 adapted to connect the sensor 9 to the data processing unit 10. As will be described in greater detail below, the data processing unit 10 has the function of processing the information concerning the progressive wear of the braking member 7.

In particular, each unit 4 comprises a band 12 made of a polymeric material such as, for example, polyimide, on which the sensor 9 and the electric wiring 11 are defined in sequence.

The portion of band 12 on which the sensor 9 is defined is inserted and blocked, for example by means of gluing or by means of retention elements, inside the braking member 7 to be monitored in terms of wear and temperature.

The monitoring unit 4 comprises a plurality of electric circuits 13, each of which is arranged on the band 12 and extends from the sensor 9 to the data processing unit 10.

Each of the circuits 13 comprises a respective detection portion 13a arranged in the sensor 9. Said detection portions 13a are arranged in series along an axis X perpendicular to the friction surface 8. As will be described below, the above-mentioned arrangement in sequence of the detection portions 13a means that the sequential interruption of the corresponding electric circuits 13 can provide information concerning the wear of the braking member 7. For said purpose, at the design stage, each detection portion 13a, according to its position on the braking member 7, is associated with a wear percentage of the braking member.

In particular, each of the electric circuits 13 has a first end connected to a track 14, electrically connected to an electric pole with potential V1, and a second end connected to another electric pole with potential V2, equal to or different from the potential V1.

Some of the detection portions 13a comprise a respective temperature detector 15, consisting of a resistance thermistor, preferably a platinum resistance thermistor. Conveniently, but not necessarily, each resistance thermistor is defined by a probe PT100 or by an equivalent device. In particular, the detection portions 13a that comprise the temperature detectors 15 alternate with detection portions 13a that do not comprise the temperature detectors 15.

The monitoring unit 4 comprises a plurality of insulating elements 16 arranged in said sensor 9 and each of which is positioned between two consecutive detection portions 13a of respective electric circuits 13. The presence of the insulating elements 16 makes it possible to prevent the breaking of a sensing portion 13a from causing a short-circuit phenomenon.

Conveniently, the sensor 9 is covered by a layer made of an insulating material such as, for example, Vincolite, resistant to the working temperatures of the braking member 7.

During use of the braking assembly 3, the braking member 7, exerting friction on the disc 6, necessarily wears in the direction of the axis X. As is evident from figure 2, during the wear along the axis X of the braking member 7, the detection portions 13a are damaged and consequently the respective electric circuit 13 is interrupted.

The data processing unit 10 reads the interruption of one of the circuits 13 and communicates to the electric control unit 5 the corresponding actual wear value of the braking member 7. In fact, as previously mentioned, each electric circuit 13 is associated with a respective percentage wear value of the braking member 7.

At this point, the data processing unit 10 processes an estimate of the progressive wear of the braking member 7 from the last actual wear information recorded. The estimate processed by the data processing unit 10 is communicated to the electric control unit 5, thus allowing the driver to stay constantly updated on the wear of the braking member. Estimation of the progressive wear proceeds until the data processing unit 10 records the interruption of a subsequent electric circuit 13, which will provide new information on the actual wear of the braking member which will be communicated to the electric control unit 5. At this point, the data processing unit will re-start estimation of the wear as described above starting from the actual wear value previously recorded. In fact, once the new actual wear measurement has been recorded and communicated to the electric control unit 5, the data processing unit proceeds with a new estimate of the wear starting from the last actual measurement taken.

The fact that estimation of the wear re-starts every time actual wear information is provided guarantees that any estimation errors between one actual measurement and another do not accumulate throughout the monitoring.

Obviously the above guarantees greater accuracy of the wear estimate communicated to the driver.

The estimation of the progressive wear will be processed based on a combination of temperature values and other conditions, which can be identified as braking conditions and working conditions of the vehicle. The braking conditions can be the hydraulic pressure of the brakes, the braking speed, the inertia, deceleration or braking time; the working conditions of the vehicle can be wheel ventilation, weight distribution, temperature outside the vehicle, humidity outside the vehicle, road surface conditions.

In particular, in the data processing unit 10 a matrix is recorded containing the wear values as a function of a plurality of combination of braking conditions and operation of the vehicle, with the friction material remaining the same. The wear values contained in the matrix have been obtained experimentally.

In this way, once the real braking and operating conditions of the vehicle have been entered in the data processing unit, the comparison with the matrix will provide the estimate of the wear.

In other words, from the comparison between the matrix and the combination of the actual braking and operating conditions of the vehicle, the data processing unit 10 proceeds with the wear estimate until it reads the interruption of a subsequent electric circuit, the detection portion 13a of which was nearest the friction surface 8, thus receiving the information on the actual wear measurement.

The present invention substantially combines a fair knowledge of the actual wear of the braking member by means of a plurality of detections (interruption of the electric circuits) with a wear forecast between two consecutive detections. Said combination allows the detection frequency to be reduced, relying on an estimate of the wear between two detections. Since the detections originate from interruption of the electric circuits, reduction in the detection frequency results in the possibility of spacing from one another the detection portions 13a of the various electric circuits 13 and, therefore, avoiding short-circuiting following the breakage thereof.

Lastly, the fact that the wear forecast re-starts from the beginning at each actual detection guarantees the reliability of the monitoring overall.

## Claims

1. A monitoring unit (4) for monitoring the wear of a braking member (7) of a vehicle (1); said monitoring unit (4) comprising a detection sensor (9) and a data processing unit (10) electrically connected to said detection sensor (9) and designed to produce information concerning the state of wear; said sensor (9) being fixed to said braking member (7) and comprising a plurality of electric circuits (13) arranged in series along an axis (X) perpendicular to a friction surface (8) of said braking member (7); at least part of said electric circuits (13) comprising a respective temperature detector (15), said monitoring unit (4) being **characterized in that** said data processing unit (10) is programmed to repeat, in a cyclic manner, a sequence of the following steps:
- actual wear detection, during which the interruption of an electric circuit (13) arranged on said braking member (7) is read and said interruption is associated with a respective actual wear value;
- wear forecast, during which, starting from said respective actual wear value, a wear forecast is delivered based on a mathematical model correlating operating conditions of the vehicle with respective wear values.

2. The monitoring unit according to claim 1, **characterized in that** said operating conditions of the vehicle comprise braking conditions chosen from the group comprising: hydraulic pressure of the brakes, speed in the braking moment, inertia, deceleration, braking time, acceleration and temperature of the brake disc.

3. The monitoring unit according to claim 2, **characterized in that** said operating conditions of the vehicle comprise working conditions of the vehicle chosen from the group comprising: wheels ventilation, weight distribution, temperature on the outside of the vehicle, humidity on the outside of the vehicle, conditions of the road surface.

4. The monitoring unit according to one of the preceding claims, **characterized in that** said wear forecast step is carried out by comparing the operating conditions of the vehicle with a previously set matrix of experimentally obtained values, which correlate wear values with the operating conditions of the vehicle.

5. The monitoring unit according to one of the preceding claims, **characterized in that** the electric circuits (13) comprising the respective temperature detector (15) are alternated with electric circuits (13) not comprising the respective temperature detector (15).

6. The monitoring unit according to one of the preceding claims, **characterized in that** said detection sensor (9) comprises a plurality of insulating elements (16), each arranged between two consecutive electric circuits (13).

7. The monitoring unit according to one of the preceding claims, **characterized in that** the temperature detectors consist of platinum resistance thermometers.

8. A monitoring method for monitoring the wear of a braking member (7) of a vehicle (1); said method being **characterized in that** it comprises the cyclic repetition of a sequence of the following steps:
- actual wear detection, during which a data processing unit (10) reads the interruption of an electric circuit (13) arranged on said braking member and associates it with an actual wear value; a plurality of electric circuits (13) being arranged on said braking member (7) in a sequential position along an axis perpendicular to a friction surface (8) of the braking member (7);
- wear forecast, during which a forecast unit (10a), starting from an actual wear value obtained from the preceding detection step, compares operating conditions of the vehicle with a previously set matrix correlating wear values with combinations of operating conditions of the vehicle;
said forecast step beginning again with every electric circuit interruption based on the new actual wear value.

9. The method according to claim 8, **characterized in that** said operating conditions of the vehicle comprise braking conditions chosen from the group comprising: hydraulic pressure of the brakes, speed in the braking moment, inertia, deceleration, braking time, acceleration and temperature of the brake disc.

10. The method according to claim 8 or 9, **characterized in that** said operating conditions of the vehicle comprise working conditions of the vehicle chosen from the group comprising: wheels ventilation, weight distribution, temperature on the outside of the vehicle, humidity on the outside of the vehicle, conditions of the road surface.

11. A vehicle **characterized in that** is comprises a unit for monitoring the wear of a braking member according to one of the claims from 1 to 7.

## Patentansprüche

1. Überwachungseinheit (4) zum Überwachen des Verschleißes eines Bremselements (7) eines Fahrzeugs (1); wobei die Überwachungseinheit (4) einen Detektionssensor (9) und eine Datenverarbeitungseinheit (10), die mit dem Detektionssensor (9) elektrisch verbunden ist und dazu bestimmt ist, Informationen betreffs des Verschleißzustands zu erzeugen, umfasst; wobei der Sensor (9) an dem Bremselement (7) befestigt ist und mehrere elektrische Schaltungen (13) umfasst, die in Reihe entlang einer Achse (X) angeordnet sind, die zu einer Reibfläche (8) des Bremselements (7) senkrecht ist; wobei wenigstens ein Teil der elektrischen Schaltungen (13) einen jeweiligen Temperaturdetektor (15) umfasst, wobei die Überwachungseinheit (4) **dadurch gekennzeichnet ist, dass** die Datenverarbeitungseinheit (10) dafür programmiert ist, in einer zyklischen Weise eine Folge der folgenden Schritte zu wiederholen:
- Detektion des tatsächlichen Verschleißes, während der die Unterbrechung einer elektrischen Schaltung (13), die an dem Bremselement (7) angeordnet ist, gelesen wird und die Unterbrechung einem jeweiligen tatsächlichen Verschleißwert zugeordnet wird;
- Verschleißvorhersage, während der, ausgehend von dem jeweiligen tatsächlichen Verschleißwert, eine Verschleißvorhersage geliefert wird, die auf einem mathematischen Modell basiert, das Betriebsbedingungen des Fahrzeugs zu jeweiligen Verschleißwerten in Beziehung setzt.

2. Überwachungseinheit nach Anspruch 1, **dadurch gekennzeichnet, dass** die Betriebsbedingungen des Fahrzeugs Bremsbedingungen umfassen, die aus der Gruppe ausgewählt sind, welche umfasst: den hydraulischen Druck der Bremsen, Geschwindigkeit zum Bremszeitpunkt, Trägheit, Verzögerung, Bremszeit, Beschleunigung und Temperatur der Bremsscheibe.

3. Überwachungseinheit nach Anspruch 2, **dadurch gekennzeichnet, dass** die Betriebsbedingungen des Fahrzeugs Arbeitsbedingungen des Fahrzeugs umfassen, die aus der Gruppe ausgewählt sind, welche umfasst: Räderbelüftung, Gewichtsverteilung, Temperatur außerhalb des Fahrzeugs, Feuchtigkeit außerhalb des Fahrzeugs, Bedingungen der Fahrbahnoberfläche.

4. Überwachungseinheit nach einem der vorhergehenden Ansprüche, **dadurch gekennzeichnet, dass** der Schritt der Verschleißvorhersage durchgeführt wird, indem die Betriebsbedingungen des Fahrzeugs mit einer zuvor festgelegten Matrix aus experimentell gewonnenen Werten verglichen werden, welche Verschleißwerte zu den Betriebsbedingungen des Fahrzeugs in Beziehung setzen.

5. Überwachungseinheit nach einem der vorhergehenden Ansprüche, **dadurch gekennzeichnet, dass** die elektrischen Schaltungen (13), die den jeweiligen Temperaturdetektor (15) umfassen, abwechselnd mit elektrischen Schaltungen (13) angeordnet sind, die den jeweiligen Temperaturdetektor (15) nicht umfassen.

6. Überwachungseinheit nach einem der vorhergehenden Ansprüche, **dadurch gekennzeichnet, dass** der Detektionssensor (9) mehrere isolierende Elemente (16) umfasst, die jeweils zwischen zwei aufeinander folgenden elektrischen Schaltungen (13) angeordnet sind.

7. Überwachungseinheit nach einem der vorhergehenden Ansprüche, **dadurch gekennzeichnet, dass** die Temperaturdetektoren aus Platin-Widerstandsthermometern bestehen.

8. Überwachungsverfahren zum Überwachen des Verschleißes eines Bremselements (7) eines Fahrzeugs (1); wobei das Verfahren **dadurch gekennzeichnet ist, dass** es die zyklische Wiederholung einer Folge der folgenden Schritte umfasst:
- Detektion des tatsächlichen Verschleißes, während der eine Datenverarbeitungseinheit (10) die Unterbrechung einer elektrischen Schaltung (13), die an dem Bremselement angeordnet ist, liest und sie einem tatsächlichen Verschleißwert zuordnet; wobei mehrere elektrische Schaltungen (13) an dem Bremselement (7) in aufeinander folgenden Positionen entlang einer Achse angeordnet sind, die zu einer Reibfläche (8) des Bremselements (7) senkrecht ist;
- Verschleißvorhersage, während der eine Vorhersageeinheit (10a) ausgehend von einem tatsächlichen Verschleißwert, der aus dem vorausgehenden Detektionsschritt erhalten wurde, Betriebsbedingungen des Fahrzeugs mit einer zuvor festgelegten Matrix vergleicht, die Verschleißwerte zu Kombinationen von Betriebsbedingungen des Fahrzeugs in Beziehung setzt;
wobei der Vorhersageschritt mit jeder Unterbrechung einer elektrischen Schaltung basierend auf dem neuen tatsächlichen Verschleißwert erneut beginnt.

9. Verfahren nach Anspruch 8, **dadurch gekennzeichnet, dass** die Betriebsbedingungen des Fahrzeugs Bremsbedingungen umfassen, die aus der Gruppe ausgewählt sind, welche umfasst: den hydraulischen Druck der Bremsen, Geschwindigkeit zum Bremszeitpunkt, Trägheit, Verzögerung, Bremszeit, Beschleunigung und Temperatur der Bremsscheibe.

10. Verfahren nach Anspruch 8 oder 9, **dadurch gekennzeichnet, dass** die Betriebsbedingungen des Fahrzeugs Arbeitsbedingungen des Fahrzeugs umfassen, die aus der Gruppe ausgewählt sind, welche umfasst: Räderbelüftung, Gewichtsverteilung, Temperatur außerhalb des Fahrzeugs, Feuchtigkeit außerhalb des Fahrzeugs, Bedingungen der Fahrbahnoberfläche.

11. Fahrzeug, **dadurch gekennzeichnet, dass** es eine Einheit zum Überwachen des Verschleißes eines Bremselements nach einem der Ansprüche 1 bis 7 umfasst.

## Revendications

1. Unité de surveillance (4) pour surveiller l'usure d'un organe de freinage (7) d'un véhicule (1) ; ladite unité de surveillance (4) comprenant un capteur de détection (9) et une unité de traitement de données (10) connectée électriquement audit capteur de détection (9) et conçue pour produire des informations concernant l'état d'usure ; ledit capteur (9) étant fixé audit organe de freinage (7) et comprenant une pluralité de circuits électriques (13) agencés en série le long d'un axe (X) perpendiculaire à une surface de friction (8) dudit organe de freinage (7) ; au moins une partie desdits circuits électriques (13) comprenant un détecteur de température (15) respectif, ladite unité de surveillance (4) étant **caractérisée en ce que** ladite unité de traitement de données (10) est programmée pour répéter, de manière cyclique, une séquence des étapes suivantes :
- une détection d'usure réelle, au cours de laquelle l'interruption d'un circuit électrique (13) agencé sur ledit organe de freinage (7) est lue et ladite interruption est associée à une valeur d'usure réelle respective ;
- une prévision d'usure, au cours de laquelle, à partir de ladite valeur d'usure réelle respective, une prévision d'usure est fournie sur la base d'un modèle mathématique corrélant des conditions de fonctionnement du véhicule avec des valeurs d'usure respectives.

2. Unité de surveillance selon la revendication 1, **caractérisée en ce que** lesdites conditions de fonctionnement du véhicule comprennent des conditions de freinage choisies dans le groupe comprenant : une pression hydraulique des freins, une vitesse au moment du freinage, une inertie, une décélération, un temps de freinage, une accélération et une température du disque de frein.

3. Unité de surveillance selon la revendication 2, **caractérisée en ce que** lesdites conditions de fonctionnement du véhicule comprennent des conditions de travail du véhicule choisies dans le groupe comprenant : une ventilation de roues, une répartition du poids, une température à l'extérieur du véhicule, une humidité à l'extérieur du véhicule, un état de la chaussée.

4. Unité de surveillance selon l'une des revendications précédentes, **caractérisée en ce que** ladite étape de prévision d'usure est réalisée en comparant les conditions de fonctionnement du véhicule à une matrice préalablement définie de valeurs obtenues expérimentalement, qui corrèlent des valeurs d'usure avec les conditions de fonctionnement du véhicule.

5. Unité de surveillance selon l'une des revendications précédentes, **caractérisée en ce que** les circuits électriques (13) comprenant le détecteur de température (15) respectif sont alternés avec des circuits électriques (13) ne comprenant pas le détecteur de température (15) respectif.

6. Unité de surveillance selon l'une des revendications précédentes, **caractérisée en ce que** ledit capteur de détection (9) comprend une pluralité d'éléments isolants (16), chacun agencé entre deux circuits électriques (13) consécutifs.

7. Unité de surveillance selon l'une des revendications précédentes, **caractérisée en ce que** les détecteurs de température consistent en des thermomètres à résistance de platine.

8. Méthode de surveillance pour surveiller l'usure d'un organe de freinage (7) d'un véhicule (1) ; ladite méthode étant **caractérisée en ce qu'**elle comprend la répétition cyclique d'une séquence des étapes suivantes :
- une détection d'usure réelle, au cours de laquelle une unité de traitement de données (10) lit l'interruption d'un circuit électrique (13) agencé sur ledit organe de freinage et l'associe à une valeur d'usure réelle ; une pluralité de circuits électriques (13) étant agencés sur ledit organe de freinage (7) dans une position séquentielle le long d'un axe perpendiculaire à une surface de friction (8) de l'organe de freinage (7) ;
- une prévision d'usure, au cours de laquelle une unité de prévision (10a), à partir d'une valeur d'usure réelle obtenue de l'étape de détection précédente, compare des conditions de fonctionnement du véhicule à une matrice précédemment définie corrélant des valeurs d'usure avec des combinaisons de conditions de fonctionnement du véhicule ;
ladite étape de prévision recommençant à chaque interruption de circuit électrique sur la base de la nouvelle valeur d'usure réelle.

9. Méthode selon la revendication 8, **caractérisée en ce que** lesdites conditions de fonctionnement du véhicule comprennent des conditions de freinage choisies dans le groupe comprenant : une pression hydraulique des freins, une vitesse au moment du freinage, une inertie, une décélération, un temps de freinage, une accélération et une température du disque de frein.

10. Méthode selon la revendication 8 ou 9, **caractérisée en ce que** lesdites conditions de fonctionnement du véhicule comprennent des conditions de travail du véhicule choisies dans le groupe comprenant : une ventilation de roues, une répartition du poids, une température à l'extérieur du véhicule, une humidité à l'extérieur du véhicule, un état de la chaussée.

11. Véhicule **caractérisé en ce qu'**il comprend une unité pour surveiller l'usure d'un organe de freinage selon l'une des revendications 1 à 7.
